# EUROPEAN PATENT APPLICATION

(11) **EP 3 702 808 A1**
(43) Date of publication of application: **02.09.2020**
(21) Application number: 19159713.7
(22) Date of filing: 27.02.2019
(51) Int. Cl.: G01S 13/93, E01F 9/30, E01F 9/576, H01Q 1/32, H01Q 1/40, H01Q 15/14, H01Q 17/00

(54) **RADAR RADIATION REDIRECTING INHIBITION LAYER**

(71) Applicant: 3M Innovative Properties Company, Saint Paul, MN 55133-3427 (US)
(72) Inventor: Lierse, Markus, 41199 Mönchengladbach (DE); Doering, Marcel, 46414 Rhede (DE); Weinmann, Mr. Christian, 52477 Alsdorf (DE)
(74) Representative: Vollmers, Hans-Gerd

(57) **Abstract**

A radar radiation redirecting inhibition layer for reducing radar cross section (RCS) of radar radiation redirection pavement marking tapes, pavement marking cover tapes incorporating such layer and methods of use are described.

## Description

### FIELD

The disclosure relates to radar radiation redirection, in particular as used in advanced driver assistance systems.

### SUMMARY

In one aspect, the present disclosure relates to a radar radiation redirecting inhibition layer for reducing radar cross section (RCS) of a radar radiation redirecting pavement marking tape.

In another aspect, the present disclosure relates to a pavement marking cover tape comprising a radar radiation redirecting inhibition layer according to the present disclosure.

In a yet another aspect, the present disclosure relates to an assembly of a radar radiation redirecting pavement marking tape and a pavement marking cover tape according to the present disclosure, whereby the radar radiation redirecting inhibition layer of the pavement marking cover tape inhibits incident radar radiation onto the radar radiation redirecting pavement marking tape or redirected from the radar radiation redirecting pavement marking tape.

In a further aspect, the present disclosure relates to a method of using a radar radiation redirecting inhibition layer for inhibiting the redirecting of radar radiation from a radar radiation redirecting pavement marking tape. The method comprises arranging a radar radiation redirecting inhibition layer according to the present disclosure onto the radar radiation redirecting pavement marking tape such that radar radiation redirecting of the pavement marking tape is inhibited.

The above summary of the present disclosure is not intended to describe each embodiment of the present invention. The details of several embodiments of the invention are also set forth in the description below. Other features, objects, and advantages of the invention will be apparent from the description and from the claims.

### BRIEF DESCRIPTION OF THE DRAWINGS

- Fig. 1: Top view of a vehicle driving on a road, showing emitted radar radiation, and a radar radiation redirecting pavement marking tape applied on the road;
- Fig. 2: Side view of Fig. 1;
- Fig. 3: Top view of the tape and vehicle of Fig. 1, showing redirected radar radiation;
- Fig. 4: Side view of Fig. 3;
- Fig. 5: Top view of a vehicle driving on a road, showing redirected inhibited radar radiation, and a pavement marking cover tape applied on top of a radar radiation redirecting pavement marking tape;
- Fig. 6: Side view of Fig. 5;
- Fig. 7: Top view of a vehicle driving on a road, showing redirected inhibited radar radiation, and a pavement marking cover tape applied on top of a radar radiation redirecting pavement marking tape;
- Fig. 8: Side view of Fig. 7;
- Fig. 9: Top view of a vehicle driving on the road, showing redirected inhibited radar radiation, and a pavement marking cover tape applied on top of a radar radiation redirecting pavement marking tape;
- Fig. 10: Side view of Fig. 9;
- Fig. 11: Top view of a vehicle driving on a road, showing redirected inhibited radar radiation, and a pavement marking cover tape applied on top of a radar radiation redirecting pavement marking tape;
- Fig. 12: Side view of Fig. 11;
- Fig. 13: Perspective cross-section of a pavement marking cover tape having an embedded radar radiation redirecting inhibition layer;
- Fig. 14: Perspective cross-section of a pavement marking cover tape having an embedded radar radiation redirecting inhibition layer on top of a radar radiation redirecting pavement marking tape.
- Fig. 15: Perspective cross-section of a pavement marking cover tape having an embedded radar radiation redirecting inhibition layer showing a reflection means.
- Fig. 16: Perspective cross-section of a pavement marking cover tape having an embedded radar radiation inhibition layer of a reflection means having apertures in the reflection means.
- Fig. 17: Perspective cross-section of a pavement marking cover tape having an embedded radar radiation inhibition layer of reflective material.
- Fig. 18: Perspective cross-section of a pavement marking cover tape having an embedded radar radiation inhibition layer of a reflection means provided as plurality of discrete elements.
- Fig. 19: Perspective cross-section of a pavement marking cover tape having an embedded radar radiation inhibition layer of a reflection means having a paint with discrete elements.
- Fig. 20: Perspective cross-section of a pavement marking cover tape having an embedded radar radiation inhibition layer of a reflection means made of a grid or mesh.
- Fig. 21: Perspective cross-section of a pavement marking cover tape having an embedded radar radiation inhibition layer of a reflection means having antenna elements.
- Fig. 22: Perspective cross-section of a pavement marking cover tape having an embedded radar radiation inhibition layer of an attenuation means.

### DETAILED DESCRIPTION

Indicators like traditional road marking and traffic signs assist human drivers in driving a vehicle safely on roads. These indicators are designed to be visible to the human eye. More recently, some cars have been equipped with driver assistance systems (e. g. so-called advanced driver assistance systems or ADAS) based on optical cameras which capture images from traditional road markings and traffic signs. However, visible camera detection of such elements may be impaired, for instance, by rain, fog, dust, snow or other adverse conditions.

Lately, other sensor systems like infrared cameras, ultrasonic parking assistants or radar systems have been incorporated into ADAS systems. These alternate sensor systems make use of indicators which can be detected through rain, fog, dust or snow, many of these indicators are invisible to the human eye.

In particular, radar systems assist a human driver in keeping in a lane, in keeping autonomous road vehicles in a lane of a road or in determining the position of the vehicle in the direction of the road. Most such radar systems operate at frequencies from about 1 GHz to 300 GHz. Long-range vehicle guidance radar systems often use a radar frequency of about 77 GHz for distances of up to 200-300 meters, while short-range vehicle guidance radar often operates at about 24 GHz for distances of up to 40 meters. Such systems require radar-visible (i. e. radar-reflecting) indicators on the road or next to the road in order to be useful for steering a vehicle.

Typically, radar systems comprise a radar radiation emitting device for emitting radar radiation (radar emitter) and a radar radiation detecting device (radar detector) for detecting redirected radar radiation, for example redirected from other vehicles, obstacles, or even from a radar radiation redirecting pavement marking tape. The radar emitter is typically installed less than one meter above ground and reflected radar signals originate from elements at distances of typically of from meters, tens of meters to a few hundred meters. The detected reflection signals may then be processed to provide additional information about the position of the vehicle relative to the radar radiation redirecting pavement marking tapes and the road.

The radar emitter may be designed to also function as a radar detector. One or more separate radar emitters and/or detectors may be used. A second radar emitter may operate at the same or a different frequency as the first radar emitter.

Radar radiation redirecting elements can be accommodated in pavement marking tapes, which also delineate the road visibly. The European patent application EP 3 276 748 A1, for example, describes radar radiation redirecting tapes including a first plurality of individual radar-reflecting directional antennae.

Radar radiation-reflecting pavement marking tapes generally work for permanent applications. However, for construction work zones, temporary pavement markings are applied to deviate from the pathway indicated by the permanent pavement marking tapes. Usually, these temporary pavement marking tapes are differently colored compared to the permanent pavement marking tapes, in order to enable the drivers to recognize which pathway has priority.

In such situations, visible camera systems for recognizing pavement marking tapes may return information that conflicts with that coming from a radar-based system, as the radar radiation redirecting pavement marking tapes may still be present, while temporary pavement markings are used.

Thus, there is a need to provide a reliable distinction of pavement marking tapes to be followed (e. g. temporary pavement marking tapes in a construction workzone) from pavement marking tapes to be disregarded (e. g. permanent pavement marking tapes in a construction workzone, where temporary pavement marking tapes are applied), especially where both visible and radar detection systems are used. The present application solves this problem by inhibiting the radar radiation-redirecting of an existing permanent radar radiation-reflective pavement marking.

The radar radiation redirecting inhibition layer, the pavement marking cover tape, as well as the method of using such layer, provides for a cost-effective and reliable redirecting inhibition, e. g. in construction workzones, where a temporary pavement marking is needed while the permanent pavement marking is still applied to the road.

The radar radiation redirecting inhibition layer may prevent the need to remove the permanent pavement marking with radar radiation redirecting function when temporary pavement marking is used, for example, in construction workzones. Such removal may be undesired due to the relatively high costs for a radar radiation redirecting pavement marking tape applied on the road, as removal may cause damage to such radar radiation redirecting pavement marking tapes, preventing reuse. The radar radiation redirecting inhibition layer helps to save costs because the permanent pavement marking tapes can remain on the road, even while using temporary pavement marking tapes.

Pavement marking cover tapes are beneficial because they provide for an easy to apply solution with all layers already being preassembled.

The radar radiation redirecting inhibition layer and the pavement marking cover tape according to the present disclosure reduces the radar cross section (RCS) of a radar radiation redirecting pavement marking tape. Reducing the radar cross section means that the redirected signal back to the radar detector is different in signal strength, frequency or shape, and includes, for example, reshaping of the radar cross section. Such a reduction of the RCS may help to enable an ADAS system in a vehicle to distinguish pavement marking tapes to be followed (e. g. temporary pavement marking tapes in a construction workzone) from pavement marking tapes to be disregarded (e. g. permanent pavement marking tapes in a construction workzone, where temporary pavement marking tapes are used).

In some embodiments, the radar radiation redirecting inhibition layer (and the pavement marking cover tape) according to the present disclosure may comprise a reflection means for providing a reflection of incoming radar radiation into a direction different than retroreflective or antiparallel to the incoming direction. In other words, radar radiation is reflected into a direction different to the direction from where it came from or functionally, not back to the radar emitter/detector. This may be done by redirecting the outgoing radar radiation into a direction different to the direction than towards the radar emitter/detector. Thereby, the radar system of a vehicle will not, or only to an insufficient degree, receive and detect the redirected radar radiation, which may enable a radar system in a vehicle to distinguish pavement marking tapes to be followed (e. g. temporary pavement marking tapes in a construction workzone) from pavement marking tapes to be disregarded (e. g. permanent pavement marking tapes in a construction workzone, where temporary pavement marking tapes are used).

In some embodiments, the radar radiation redirecting inhibition layer (and the pavement marking cover tape) according to the present disclosure may comprise an attenuation means for attenuating incoming and/or outgoing radar radiation such that redirected radar radiation exhibits a signal strength different, preferably lower, than the one of the incoming radar radiation. This may be done by attenuating the signal strength of the redirected radar radiation in case of redirecting into the same direction as the outgoing radar radiation. Again, the radar system of a vehicle will consequently not, or only to an insufficient degree, receive and detect the radar radiation which had been emitted. This also helps to enable a radar system in a vehicle to distinguish pavement marking tapes to be followed (e. g. temporary pavement marking tapes in a construction workzone) from pavement marking tapes to be disregarded (e. g. permanent pavement marking tapes in a construction workzone, where temporary pavement marking tapes are used).

Typically, a radar radiation redirecting pavement marking tape applied on a road defines a plane. The tape is elongated and defines, in the plane of the tape, a length direction, a width direction orthogonal thereto and - perpendicular to the plane - a height direction. For example, the tape comprises a first plurality of individual radar-reflecting elements. Each of these reflecting elements is operable to redirect incoming radar radiation nearly parallel to the plane of the tape.

The predominant redirection of radar radiation into a direction parallel or nearly parallel to the plane of the tape provides a high radar radiation intensity in typical vehicle guidance geometries, where a radar beam is emitted from a vehicle, hits the radar radiation redirecting tape metes, tens of meters or even hundreds of meters away from the vehicle at a shallow angle, and is redirected back to an on-board detector.

Polymeric materials are suitable material for embedding in them reflection or attenuation means of a tape according to the present disclosure. Such materials exhibit a complex relative permittivity having a real part and an imaginary part. Typically, the real part of many polymeric materials is in the range of greater than 1 to 40, e. g., greater than 1 to 8, greater than 1 to 6, or even 2 to 4. Values of complex relative permittivity for a specific material can be obtained from numerous existing tables. Complex relative permittivity is known to be a function of frequency. Therefore, standard equipment and methods may be used to measure relative permittivity for the intended use conditions. The skilled person is able to select a material with a proper complex relative permittivity or any other relevant property, which provides for the adequate.

In some embodiments, a pavement marking cover tape having a radar radiation redirecting inhibition layer according to the present disclosure defines a plane and inhibits the redirecting of incoming radar radiation to a radar detector. The pavement marking cover tape may be applied on a road. The tape may be elongated and may define, in the plane of the tape, a length direction, a width direction orthogonal thereto and - perpendicular to the plane - a height direction.

Generally, and independent of other features described herein, a pavement marking cover tape according to the present disclosure may be an adhesive tape or a self-adhesive tape. An adhesive tape comprises an adhesive layer, e. g. a layer of hotmelt adhesive or of pressure-sensitive adhesive, by which the tape can be attached to a surface of a road or to other surfaces, either permanently or temporarily. A self-adhesive tape comprises a layer of a pressure-sensitive adhesive for attachment to a road surface or to another surface.

Alternatively, the pavement marking cover tape according to the present disclosure may be adhesive-free. Such adhesive-free tapes may be attached to surfaces via separate adhesive elements, not comprised in the tape, or by non-adhesive means. A tape which is adhesive-free initially may be provided with adhesive at a later stage, e. g. shortly before attachment to a surface. Adhesive-free tapes may thus provide enhanced versatility in manufacturing and/or in application.

A pavement marking cover tape according to the present disclosure may be conformable. That is to say, it may be adapted to follow contours of a surface when being pressed against the surface. A conformable tape is easier to apply over surface features of the road surface. Conformable adhesive tapes may provide a greater contact surface between adhesive and the road surface, so that they adhere to the road surface more reliably.

In some embodiments, the reflection means of the radar radiation redirecting inhibition layer comprises a continuous metal layer. Suitable metals for the metal layer include copper, aluminum, silver, gold, iron, or combinations or alloys thereof. Continuous metal layers may be beneficial because these are easy to apply in such radar radiation redirecting inhibition layers. Also, a continuous metal layer may provide a reliable reflection of radar radiation.

In some embodiments, the reflection means of the radar radiation redirecting inhibition layer comprises apertures. The apertures typically have a size in diameter or largest cross-sectional extension chosen so as to provide adequate inhibition while minimizing material usage. For instance, apertures as large as one fourth the wavelength of the radiation may be used. Such apertures may be beneficial as they may help to save material compared to a continuous metal layer.

In some embodiments, the reflection means of the radar radiation redirecting inhibition layer comprises elements that are electrically conductive, or that render the layer electrically conductive, for instance, at least one discrete metallic element. Suitable metals for the metallic elements may include copper, aluminum, silver, iron, gold, or combinations or alloys thereof. The discrete metallic elements may be formed of a metal. Alternatively, the discrete metallic elements may be formed of a non-metallic material (for instance a non-metal carrier comprising ceramics, carbon fibers, glass fibers, epoxy and combinations thereof) with a metallic coating thereon. Such discrete metallic elements may be beneficial as they may help to save material compared to a continuous metal layer.

In some embodiments, the reflection means of the radar radiation redirecting inhibition layer comprises at least two different dielectric materials in contact with each other. The two different dielectric materials in contact with each other are forming a boundary, the boundary works as a reflection means. Such layer with two different dielectric materials may be beneficial as they may help to save material, in particular metal, compared to a continuous metal layer.

In some embodiments, the discrete metallic element comprises strands, stripes, wires, particles or combinations thereof. Such strands, stripes, wires, particles or combination thereof may be beneficial as they may help to save material compared to a continuous metal layer.

In some embodiments, the reflection elements of the radar radiation redirecting inhibition layer comprises a paint comprising the discrete elements, in particular metal particles. Such paint may be beneficial as because it is easy to apply during the manufacture of the radar radiation redirecting inhibition layer.

In some embodiments, the discrete elements scatter the incoming radar radiation.

In some embodiments, the discrete elements form a grid or mesh. The mesh or grid comprises elongated parts forming the mesh or grid and a plurality of interstices, e. g. apertures, therein. The apertures typically have a size in diameter or largest cross-sectional extension chosen so as to provide adequate inhibition while minimizing material usage. For instance, apertures as large as one fourth the wavelength of the radiation may be used. Such grids or meshes may be beneficial as they may help to save material compared to a continuous metal layer.

In some embodiments, the discrete elements comprise antenna elements for redirecting the incoming radar radiation (into a direction different than retroreflective or antiparallel to the incoming direction). Such antennae elements may be beneficial as they may help to save material compared to a continuous metal layer.

In some embodiments, the angle between the direction of an incoming radar radiation and the direction of a redirected radar radiation or a maximum reflectivity is at least 20°, at least 30°, at least 45° or even at least 90°. Thereby, the radar system of a vehicle will not, or only to an insufficient degree, receive and detect the redirected radar radiation, which may enable a radar system in a vehicle to distinguish pavement marking tapes to be followed (e. g. temporary pavement marking tapes in a construction workzone) from pavement marking tapes to be disregarded (e. g. permanent pavement marking tapes in a construction workzone, where temporary pavement marking tapes are used).

In some embodiments, the radar radiation redirecting inhibition layer comprises an attenuation means for attenuating incoming and/or outgoing radar radiation. In certain embodiments, the attenuation means comprises a material exhibiting a complex relative permittivity with a dielectric constant εᵣ greater than 3. Materials with such dielectric constant may be easy to provide and may be cost-efficient.

In some embodiments, the radar radiation redirecting inhibition layer comprises a reflection means and an attenuation means. With such combination of means, the redirected radar radiation may even reach the radar radiation emitter/detector to a lesser degree, not at all or with an even lower signal strength compared to just using one of these means individually. Such a combination may further reduce the RCS and may further reduce the signal strength of the radar signal as received by the radar detector of the vehicle thereby enhancing the distinction between permanent radar radiation redirecting pavement marking tapes to be disregarded and permanent radar radiation redirecting pavement marking tapes to be followed the distinction of pavement marking tapes to be followed (e. g. temporary pavement marking tapes in a construction workzone) from pavement marking tapes to be disregarded (e. g. permanent pavement marking tapes in a construction workzone, where temporary pavement marking tapes are used).

In some embodiments, the pavement marking cover tape comprises an optical cover layer on a first major surface thereof. Such optical cover layer is beneficial as it provides for a suitable surface typically used on roads. In certain embodiments, the optical cover layer may comprise asphalt/bitumen. Asphalt/Bitumen may be beneficial because these are easy to apply. In certain embodiments, the optical cover layer may comprise a polyurethane layer with or without ceramic particles embedded in the polyurethane layer. Such layers with particles may be beneficial, as these may help to improve the friction between the vehicle tire and the pavement marking cover tape. In some embodiments, the pavement marking cover tape comprises an adhesive layer on a second major surface. This may be beneficial because a pre-assembled adhesive reduces the effort in application of such pavement marking cover tapes to a road or on top of an existing radar radiation redirecting pavement marking tape.

In some embodiments, the discrete elements form a grid or mesh. The mesh or grid comprises elongated parts formed by the discrete elements. These parts form the mesh or grid and a plurality of interstices, e. g. apertures, therein. The apertures typically have a size in diameter or largest cross-sectional extension chosen so as to provide adequate inhibition while minimizing material usage. For instance, apertures as large as one fourth the wavelength of the radiation may be used. Such grids or meshs may be beneficial as they may help to save material compared to a continuous metal layer.

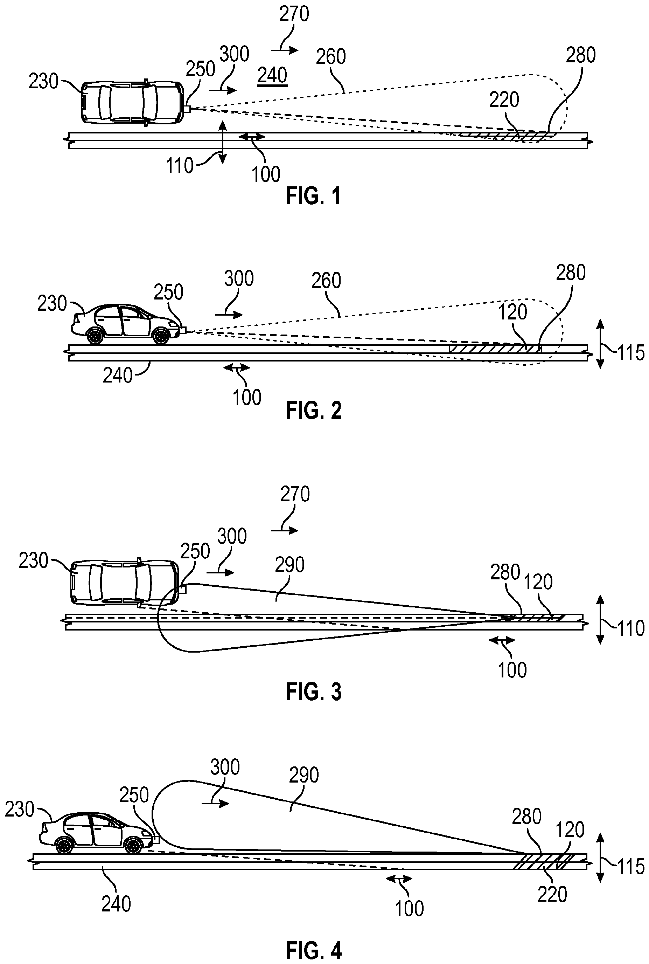

In FIGs. 1 and 2, radar radiation redirecting pavement marking tape 220 may be typically used for marking a road, so that the road marking facilitates ADAS radar-enabled systems. In a useful geometry, tape 220 is applied on the road with its length direction indicated with 100, i. e. in the driving direction of vehicles following the road. The width direction of tape 220 is indicated with 110, which is in a plane of tape 220, but orthogonal to length direction 100. The height direction of the tape 220, which is orthogonal to the length and width direction 100, 110, is indicated by 115. FIG 1 shows, in top view, vehicle 230 driving on road 240 in driving direction 300, i. e. towards the right in these Figures. Radar emitter 250, mounted on vehicle 230, emits radar beam 260 roughly in driving direction 300. The lobe of beam 260 indicates the angular intensity distribution of radar beam 260. Furthermore, radar emitter 250 may be designed to also function as a radar detector. In some embodiments, one or more separate radar detectors may be used. In some embodiments, a second radar emitter may be used operating at the same or a different frequency than the first radar emitter. The detected reflection signals may then be processed to provide additional information about the position of the vehicle relative to the tapes and the road.

Road 240 is laterally delimited by radar radiation redirecting pavement marking tape 220. Tape 220 is attached to road 240 such that its length direction 100 is aligned with, i. e. oriented parallel or antiparallel to, driving direction 300 of vehicle 230, which is generally also the direction of road 240, i. e. road direction 270.

In Figure 1, car 230 drives on the right-hand side of road 240, and radar radiation redirecting pavement marking tape 220 is applied on the right-hand side of road 240. In this case, it is advantageous to orient tape 220 such that the common redirecting direction is parallel or antiparallel to driving direction 300 of cars driving on the right-hand side of road 240. Radar radiation redirecting pavement marking tape 220 may also be used for middle-lane keeping or for left-hand side lane keeping.

Radar beam 260 hits radar radiation redirecting pavement marking tape 220 at signal area 280 of tape 220, which may be at a distance of tens of meters in front of vehicle 230. Signal area 280 moves forward as vehicle 230 drives, at about the speed of the vehicle. In other words, while vehicle 230 is driving, radar beam 260 hits more advanced locations of tape 220 successively. Advantageously, radar emitter 250 is adjusted such that a maximum intensity of radar beam 260 is irradiated on tape 220 at a desired, possibly predetermined distance from radar emitter 250. For a smooth guidance of a vehicle, it is generally desired that a radar looks some tens of meters, or a few hundreds of meters, ahead of the vehicle.

Figure 2 shows the same vehicle of Fig. 1, but in side view. Radar beam 260 is shown as emitted, not taking into account any reflections from the road surface or any distortions. The radar beam 260 may have an axially- symmetric intensity distribution, but the actual "shape" of the radar beam 260 is not essential.

While Figures 1 and 2 show radar beam 260 as emitted by radar emitter 250, Figures 3 and 4 visualize, in top view and side view respectively, the scene of Figures 1 and 2, but instead showing the pavement marking cover tape 120 on top of radar radiation redirecting tape 220. Also, instead of emitted radar radiation 260, reflected radar radiation 290 is shown in FIGs. 3 and 4. Thus, FIGs. 1 and 2 show an emitted radar beam 260 hitting signal area 280, whereby redirected radar radiation 290 is indicated in FIGs. 3 and 4. FIGs. 3 and 4 further show length direction indicated with 100, width direction indicated with 110 and height direction indicated with 115 of tape 120.

Although radar radiation redirecting pavement marking tape 220 is shown along the right hand side of road 240, other locations are also useful including, e. g., the left hand side of the road, the center line of a lane, the boundary between lanes, or any combination thereof. Depending on the location of the tape, the predominant reflection directions of the various reflection element areas may be adjusted.

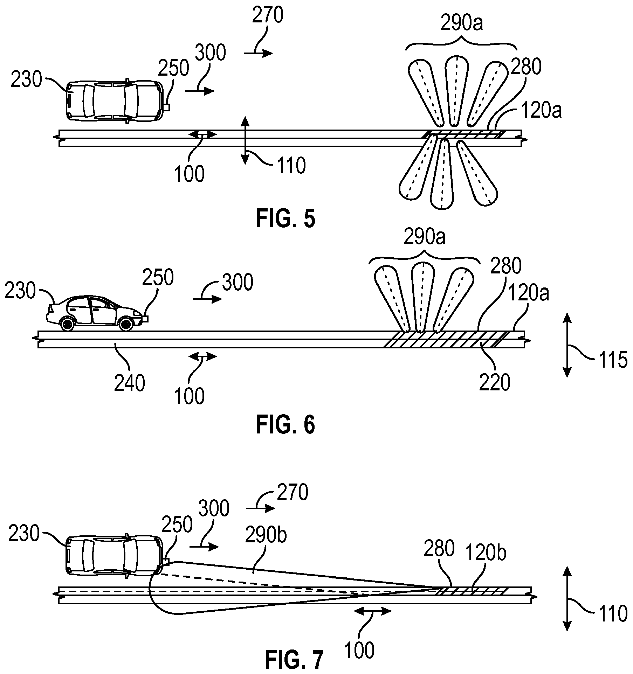

FIG. 5 shows in a top view of vehicle 230 driving on road 240 in direction 300 and pavement marking cover tape 120a applied on top of radar radiation redirecting pavement marking tape 220 (not shown here, see FIG. 6) in length direction 100. Road 240 has a road direction indicated with 270. Width direction 110 is in a plane perpendicular to length direction 100. FIG. 5 further indicates redirected inhibited radar radiation 290a caused by pavement marking cover tape 120a. Different to FIGS. 3 and 4, redirected radar radiation 290a is being scattered or diffusely reflected such that is not being received by radar emitter/detector 250.

FIG. 6 indicates in a side view vehicle 230 driving on road 240 in direction 300 and redirected inhibited radar radiation 290a of FIG. 5. In addition to FIG. 5, radar radiation redirecting pavement marking tape 220 is shown here underneath of pavement marking cover tape 120a such that redirected inhibited radar radiation 290a is redirected by pavement marking cover tape 120a and thus not being received by radar emitter/detector 250. FIG. 6 further shows length direction indicated with 100 and height direction indicated with 115 of tape 120a.

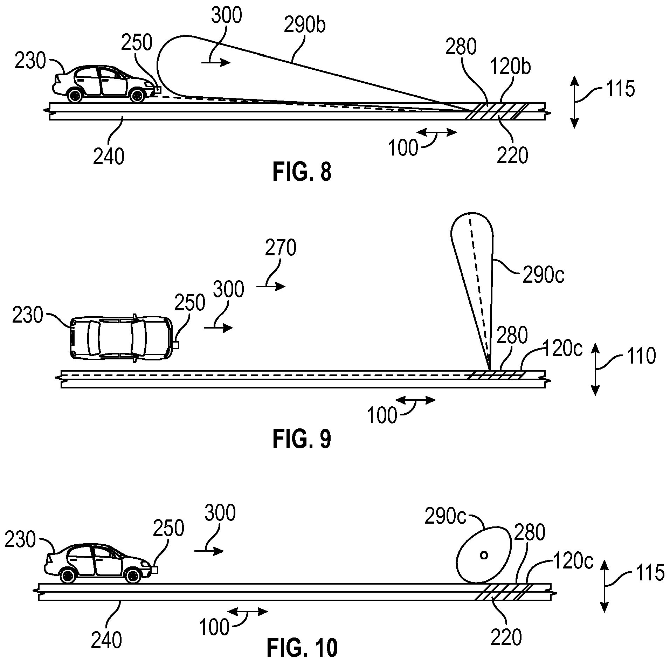

FIG. 7 shows in a top view vehicle 230 driving on road 240 in direction 300 and pavement marking cover tape 120b applied on top of radar radiation redirecting pavement marking tape 220 (not shown here, see FIG. 8). FIG. 7 further shows length direction indicated with 100 and width direction indicated with 110 of tape 120b. Road 240 has a road direction indicated with 270. Redirected inhibited radar radiation 290b is similar in geometry to the one in FIGS 3 and 4. The signal strength is reduced - which is not visible in FIG. 7 - due to pavement marking cover tape 120b such that - different to FIGs. 5 and 6 - redirected radar radiation 290b is being received by the radar emitter/detector, but with a different signal strength. Such a different signal strength is being processed by the control unit of radar emitter/detector 250 in order to differentiate such a recognized pavement marking tapes exhibiting a different redirected radar radiation indicated with 290b from that one of other pavement marking tapes (not shown) used on road 240.

FIG. 8 shows a side view of FIG. 7 where vehicle 230 is driving on road 240 in direction 300, whereby radar radiation redirecting radar radiation redirecting pavement marking tape 220 is shown here underneath of pavement marking cover tape 120b. FIG. 8 further shows length direction indicated with 100 and height direction indicated with 115 of tape 120b. Redirected inhibited radar radiation 290b is similar in geometry to the one in FIGS. 3 and 4, but again with reduced signal strength (also not visible here) such that radar emitter/detector 250 is receiving redirected radar radiation 290b but with a different signal strength.

FIG. 9 shows in a top view of vehicle 230 driving on road 240 in direction 300, indicating redirected inhibited radar radiation 290c, and pavement marking cover tape 120c applied on top of radar radiation redirecting pavement marking tape 220 (not visible here, please see FIG. 10). FIG. 9 further shows length direction indicated with 100 and width direction indicated with 110 of tape 120c. Road 240 has a road direction indicated with 270. The signal strength and geometry of redirected inhibited radar radiation 290c can be the same as or different to the one of FIGS. 3 and 4, but with a different orientation (almost orthogonal to driving direction 300 as shown in FIG. 9) such that redirected inhibited radar radiation 290c does not reach radar emitter/detector 250 of vehicle 230.

FIG. 10 shows in a side view the scene of FIG. 9, whereby redirected inhibited radar radiation 290c is oriented almost perpendicular to the plane of the paper seen from the viewer and almost orthogonal to driving direction 300, respectively. FIG. 10 shows in addition to FIG. 9 radar radiation redirecting pavement marking tape 220 on top of which pavement marking cover tape 120c is arranged. FIG. 10 further shows length direction indicated with 100 and height direction indicated with 115 of tape 120c. Similar to FIG. 9, redirected radar radiation 290c does not reach radar emitter/detector 250 of vehicle 230 driving on road 240.

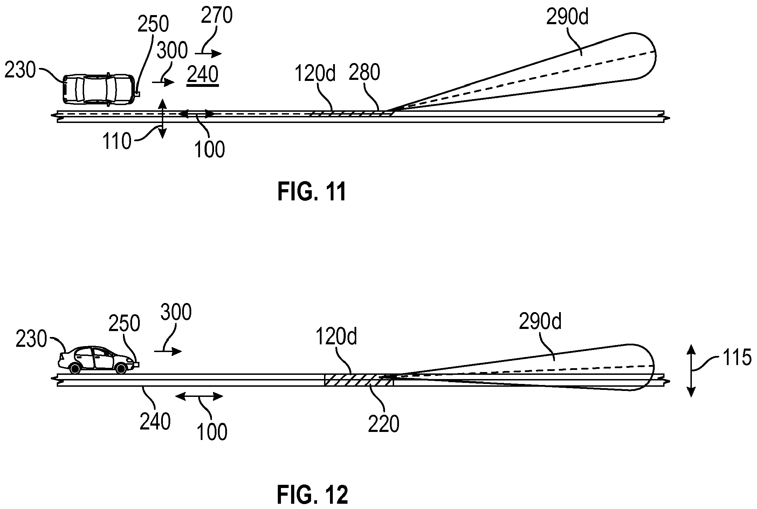

FIG. 11 shows in a top view vehicle 230 driving on road 240 showing redirected inhibited radar radiation 290d, and pavement marking cover tape 120d applied on top of radar radiation redirecting pavement marking tape 220 (not visible here, please see FIG. 12). FIG. 11 further shows length direction indicated with 100 and width direction indicated with 110 of tape 120d. Road 240 has a road direction indicated with 270. The signal strength and geometry of redirected inhibited radar radiation 290d may be similar to the one of FIGS. 9 and 10, but with a different orientation (here nearly co-linear to emitted radar radiation 260 as shown in FIGS. 1 and 2) such that redirected inhibited radar radiation 290d does not reach radar emitter/detector 250 of vehicle 230.

FIG. 12 shows in a side view the scene of FIG. 11, whereby redirected inhibited radar radiation 290d is oriented nearly co-linear to emitted radar radiation 260 as shown in FIGS. 1 and 2. FIG. 12 shows in addition to FIG. 11 radar radiation redirecting pavement marking tape 220 on top of which pavement marking cover tape 120d is arranged. FIG. 12 further shows length direction indicated with 100 and height direction indicated with 115 of tape 120d. FIG. 12 also shows vehicle 230 having radar emitter/detector 250 thereon and driving on road 240 in direction 300. Similar to FIG. 12, redirected inhibited radar radiation 290d does not reach radar emitter/detector 250 of vehicle 230.

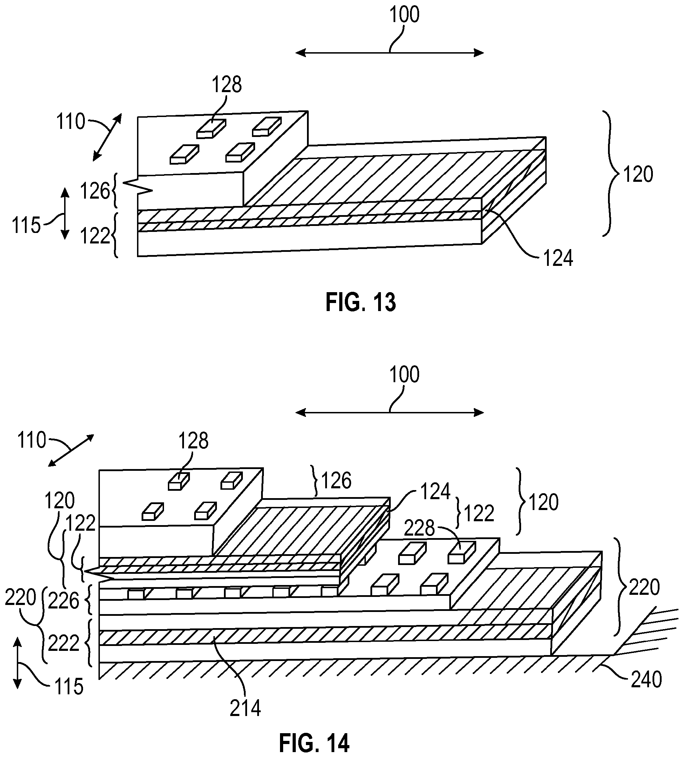

Figure 13 is a cross-sectional view of pavement marking cover tape 120 according to the present disclosure, with radar radiation redirecting inhibition layer 122 according to the present disclosure. Tape 120 extends in length direction 100 and width direction 110, which is in plane of the tape orthogonal to length direction 100. FIG. 13 further shows height direction 115 of tape 120, whereby the height direction 115 is orthogonal to the plane with length and width direction 100, 110 therein. Tape 120 further comprises optical cover layer 126 arranged on top of layer 122. Suitable materials for optical cover layer 126 include asphalt/bitumen, polyurethane. Additionally, optical cover layer 126 may comprise grid elements 128 on top or ceramic particles embedded therein. In use, optical cover layer 126 is colored in black or at least similarly to the color of the road onto which pavement marking cover tape 120 is applied (not illustrated in FIG. 13).

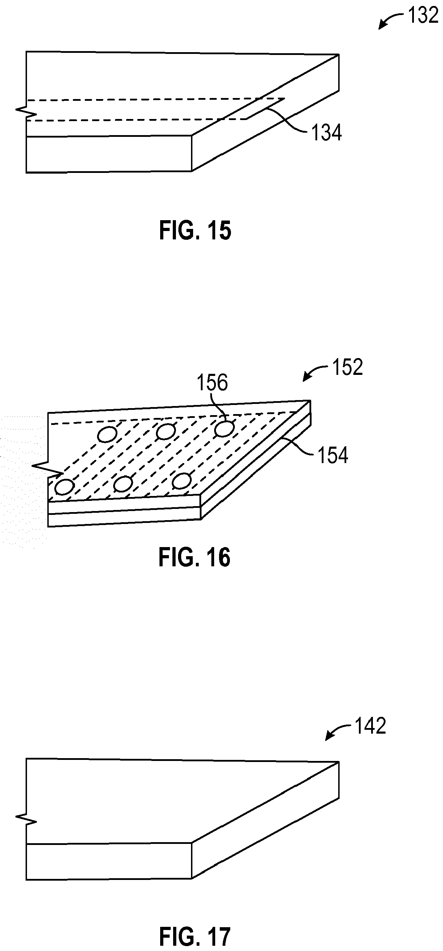

Radar radiation redirecting inhibition layer 122 may further comprise reflection means 124 for inhibiting redirecting of incoming radar radiation 260 (not shown here) emitted from and back to the on-board radar emitter/detector 250 (also not shown here). More details of reflection means 124 are described below under FIGS. 15 to 21.

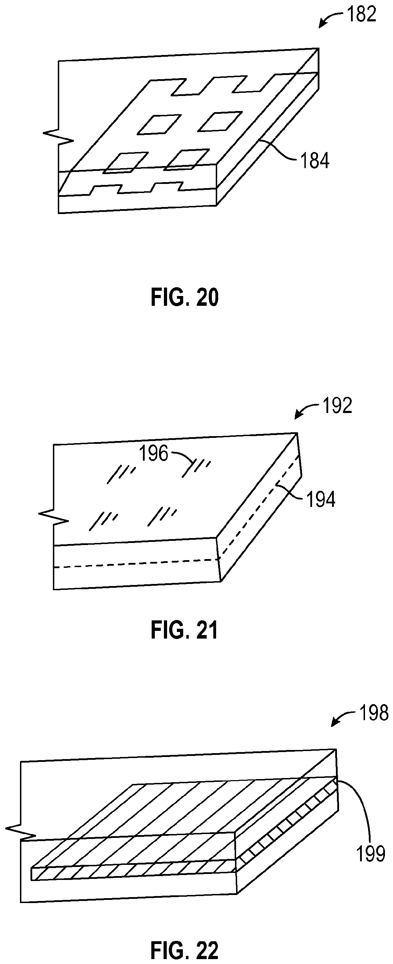

Radar radiation redirecting inhibition layer 122 may further comprise attenuation means 199 for inhibiting redirecting of incoming radar radiation 260 (not shown here) emitted from and back to the on-board radar emitter/detector 250 (also not shown here). More details of reflection means 199 are described below under FIG. 22.

FIG. 14 is a cross-sectional view of an assembly of pavement marking cover tape 120 as shown in FIG. 13 arranged on top of radar radiation redirecting pavement marking tape 220. Tape 220 comprises top layer 226 comprising grid elements 228 for enhancing friction to a vehicle tire. Additionally, grid elements 228 may comprise retro-reflective elements. Tape 220 further comprises radar radiation redirecting layer 222. Layer 222 provides the connection of tape 220 to a road (such as road 240 as shown in FIG. 14). Layer 222 further comprises radar radiation redirecting layer 224 for redirecting incoming radar radiation from a radar emitter/detector as described above into a direction back to the radar emitter/detector. Pavement marking cover tape 120 and radar radiation redirecting pavement marking tape 220 extend in length direction 100 and width direction 110, which is in plane of the tapes orthogonal to length direction 100. FIG. 14 further shows height direction 115 of tapes 120, 220, whereby the height direction 115 is orthogonal to the plane with length and width direction 100, 110 therein.

Figure 15 shows a cross-sectional view of reflection means 134 of radar radiation redirecting inhibition layer 132. In the embodiment shown, reflection means 134 is embedded in layer 132. Reflection means 134 is elongated and oriented centrally here. Other configurations are conceivable, for example that reflection means 134 is located offset the center, i. e. oriented towards one side (e. g. left or right, up or down). In the embodiment shown, reflection means 134 has the same length and/or width extension as layer 132. It is also conceivable that the length and/or width extension of reflection means 134 is less than that of layer 132. In the embodiment shown, reflection means 134 is with its main extension parallel to the main extension of layer 132. Other configurations are conceivable, e. g. an inclined orientation of the reflection means 134 relative to layer 132. Suitable materials for the reflection means exhibit complex relative permittivity with a dielectric constant εr of equal to or more than 3. Alternatively, in particular if conductive materials are used, reflection means 134 may comprise metal such as for example copper, silver, iron, aluminium, gold, or combination or alloys thereof. Reflection means 134 may comprise also a non-metal carrier (e. g. ceramics, carbon fibers, glass fibers, epoxy and combinations thereof) and a metal coating.

FIG. 16 shows reflection means 154 of radar radiation redirecting inhibition layer 152 according to another embodiment. Here, reflection means 154 has substantially the same areal extension as layer 152. Different to the configuration shown in FIG. 16, the extension of reflection means 154 may be less than the extension of layer 152. Reflection means 154 is oriented with its main extension substantially parallel to that of layer 152. Other configurations are conceivable, for example that the reflection means 154 is inclined relative to layer 152.

In addition, reflection means 154 exhibits a plurality of apertures 156 distributed along reflection means 154. Apertures 156 as shown in Fig. 16 exhibit a round shape. Other shapes are conceivable, for example rectangular, square-shaped, oval etc. Typically, apertures 156 are made by punching, die cutting, stamping, etching or any other suitable method. Suitable materials for the reflection means exhibit complex relative permittivity with a dielectric constant εr of equal to or more than 3. Alternatively, in particular if conductive materials are used, reflection means 134 may comprise metal such as for example copper, silver, iron, aluminium, gold, or combination or alloys thereof. Reflection means 134 may comprise also a non-metal carrier (e. g. ceramics, carbon fibers, glass fibers, epoxy and combinations thereof) and a metal coating.

FIG. 17 shows a radar radiation redirecting inhibition layer 142 consisting of a reflective material. Different to the configuration as described in FIGS. 15 or 16, the reflective material of layer 142 forms reflection means 142 which is substantially equal to layer 142. Suitable materials for the reflection means exhibit a dielectric constant εr of equal to or more than 3. Typically, reflection means 142 comprises metal such as for example copper, silver, iron, aluminium, gold, or combinations or alloys thereof etc.

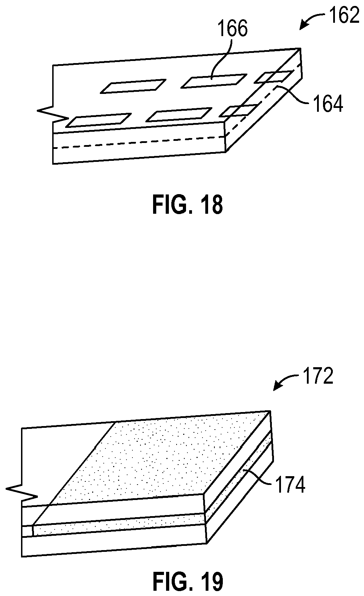

FIG. 18 shows radar radiation redirecting inhibition layer 162 having reflection means 164 provided as plurality of discrete elements 166. Here, discrete elements 166 are strip-shaped and arranged in two stripes which are parallel to each other. Discrete elements 166 are spaced from each other in length direction as well as in width direction.

FIG. 19 shows radar radiation inhibition layer 172 having a paint with discrete elements distributed or dispersed therein. The discrete elements form layer 174 to provide reflection means 174.

FIG. 20 shows radar radiation inhibition layer 182 having reflection means 184 made of a grid or mesh. The grid or mesh comprises web-like portions which interconnect the parts of the grid or mesh. The grid or mesh further comprises open portions between the interconnecting portions of the grid or mesh. Typically, reflection means 184 comprises metal such as for example copper, silver, iron, aluminium, gold, or combinations or alloys thereof. Alternatively, reflection means 184 may comprise also a non-metal carrier (for instance comprising ceramics, carbon fibers, glass fibers, epoxy and combinations thereof) and a metal coating.

FIG. 21 shows radar radiation redirecting inhibition layer 192 having reflection means 194 provided as plurality of antenna elements 196. Antenna elements 196 are spaced from each other in length direction as well as in width direction. Typically, the distance of the antenna elements is not more than two wavelengths. Suitable antenna elements are described in EP-A-3 276 748 A1.

An antenna element 196 may be adapted, e. g. by its shape, size, conductivity, or its location or orientation relative to other antenna conductors of the antenna, for reflecting or redirecting or re-emitting or picking up incident radiation. Examples of antenna conductors are the resonant dipole, a director or a reflector in a Yagi-type antenna. An antenna conductor may consist of, or comprise, a trace or path of a conductive material or a slot in a conductive material on a carrier. Specifically, it may consist of, or comprise, a copper trace or slot in copper on a polymeric carrier. Alternatively, an antenna conductor may consist of, or comprise, a piece of wire or a metal bar. Generally, antenna conductors should be electrically highly conductive, although less conductive antenna conductors may also provide an acceptable performance. As in a Yagi-type antenna, also antenna conductors in a radar radiation redirecting tape may be electrically connected with each other. Alternatively, they may be electrically insulated from each other. A tape comprising such antenna conductors is described, for example, in EP-A-3 276 748 A1.

FIG. 22 shows radar radiation redirecting inhibition layer 198 having an attenuation means 199. As shown, attenuation means 199 has the same areal extension in length and/or width direction as layer 198. It is also conceivable that the extension of the attenuation means 199 may be less that the extension of layer 198. Attenuation means 199 is oriented with its main extension substantially parallel to that of the layer 198. Other configurations are conceivable, for example that attenuation means 199 is inclined relative to layer 198.

### Embodiments

1. A radar radiation redirecting inhibition layer for reducing radar cross section (RCS) of a radar radiation redirecting pavement marking.
2. The radar radiation redirecting inhibition layer according to embodiment 1, wherein the layer defines a plane and inhibits the redirecting of incoming radar radiation to a radar radiation detector.
3. The radar radiation redirecting inhibition layer according to any of embodiments 1 or 2 comprising a reflection means for providing a reflection of incoming radar radiation into a direction different than antiparallel to the incoming direction.
4. The radar radiation redirecting inhibition layer according to embodiment 3, wherein the reflection means comprises a continuous metal layer.
5. The radar radiation redirecting inhibition layer according to embodiment 4, wherein the metal layer comprises apertures.
6. The radar radiation redirecting inhibition layer according to embodiment 3, wherein the reflection means comprises at least one discrete metallic element.
7. The radar radiation redirecting inhibition layer according to embodiment 6, wherein the discrete metallic element comprises strands, stripes, wires, particles or combinations thereof.
8. The radar radiation redirecting inhibition layer according to embodiment 7, wherein the reflection means comprises a paint comprising the discrete elements, in particular the particles.
9. The radar radiation redirecting inhibition layer according to any of embodiments 6 to 8, wherein the discrete elements scatter the incoming radar radiation.
10. The radar radiation redirecting inhibition layer according to any of embodiments 6 to 9, wherein the discrete elements form a grid or mesh.
11. The radar radiation redirecting inhibition layer according to any of embodiments 6 to 10, wherein the discrete elements comprise antenna elements for redirecting the incoming radar radiation.
12. The radar radiation redirecting inhibition layer according to any of embodiments 1 to 11, wherein the angle between the direction of an incoming radar radiation and the direction of a redirected radar radiation or a maximum reflectivity is at least 20°, at least 30°, at least 45° or even at least 90°.
13. The radar radiation redirecting inhibition layer according to any of embodiments 1 to 12 comprising an attenuation means for attenuating incoming and/or outgoing radar radiation.
14. The radar radiation redirecting inhibition layer according to embodiment 13, wherein the attenuation means comprises a material exhibiting complex relative permittivity with a dielectric constant εᵣ greater than 3.
15. The radar radiation redirecting inhibition layer according to any of embodiments 1 to 14, wherein the inhibition means comprises the reflection means according to any of embodiment 3 to 11 and the attenuation means according to any of embodiments 13 or 14.
16. The radar radiation redirecting inhibition layer according to embodiment 3 to 15, wherein the reflection means comprises at least two different dielectric materials in contact with each other forming a boundary.
17. A pavement marking cover tape comprising a radar radiation redirecting inhibition layer according to any of embodiments 1 to 16.
18. The pavement marking cover tape according to embodiment 17, further comprising an optical cover layer on a first major surface thereof.
19. The pavement marking cover tape according to embodiment 18, wherein the optical cover layer comprises asphalt/bitumen.
20. The pavement marking cover tape according to any of embodiments 18 or 19, wherein the optical cover layer comprises a polyurethane layer and ceramic particles embedded in the polyurethane layer.
21. The pavement marking cover tape according to any of embodiments 17 to 20 comprising an adhesive layer on a second major surface.
22. An assembly of a radar radiation redirecting pavement marking tape and a pavement marking cove tape according to any of embodiments 17 to 21, wherein the radar radiation inhibition layer of the pavement marking cover tape inhibits incident radar radiation onto the pavement marking tape or redirected from the pavement marking tape.
23. A method of using a radar radiation redirecting inhibition layer according to any of the embodiments 1 to 16 for inhibiting radar radiation redirecting of a radar radiation redirecting pavement marking tape.
24. The method according to embodiment 23, the method comprising arranging a radar radiation redirecting inhibition layer according to any of embodiments 1 to 16 onto said radar radiation redirecting pavement marking tape such that radar radiation redirecting of said pavement marking tape is inhibited.
25. The method according to embodiment 24, the method further comprising arranging an optical cover layer on a first major surface of the radar radiation redirecting inhibition layer.
26. A method of using a pavement marking cover tape according to any of the embodiments 17 to 21 for inhibiting radar radiation redirecting of a radar radiation redirecting pavement marking tape.
27. The method according to embodiment 26, the method comprising arranging a pavement marking cover tape according to any of embodiments 17 to 21 onto said radar radiation redirecting pavement marking tape such that radar radiation redirecting of said pavement marking tape is inhibited.

## Claims

1. A radar radiation redirecting inhibition layer for reducing radar cross section (RCS) of a radar radiation redirecting pavement marking.

2. The radar radiation redirecting inhibition layer according to claim 1, wherein the layer defines a plane and inhibits the redirecting of incoming radar radiation to a radar radiation detector.

3. The radar radiation redirecting inhibition layer according to any of claims 1 or 2 comprising a reflection means for providing a reflection of incoming radar radiation into a direction different than antiparallel to the incoming direction.

4. The radar radiation redirecting inhibition layer according to claim 3, wherein the reflection means comprises a continuous metal layer.

5. The radar radiation redirecting inhibition layer according to claim 4, wherein the metal layer comprises apertures.

6. The radar radiation redirecting inhibition layer according to claim 3, wherein the reflection means comprises at least one discrete metallic element.

7. The radar radiation redirecting inhibition layer according to claim 6, wherein the discrete elements comprise antenna elements for redirecting the incoming radar radiation.

8. The radar radiation redirecting inhibition layer according to any of claims 1 to 7 comprising an attenuation means for attenuating incoming and/or outgoing radar radiation.

9. The radar radiation redirecting inhibition layer according to claim 8, wherein the attenuation means comprises a material exhibiting a complex relative permittivity with a dielectric constant εr greater than 3.

10. The radar radiation redirecting inhibition layer according to claim 3, wherein the reflection means comprises at least two different dielectric materials in contact with each other forming a boundary.

11. A pavement marking cover tape comprising a radar radiation redirecting inhibition layer according to any of claims 1 to 10.

12. The pavement marking cover tape according to claim 11, further comprising an optical cover layer on a first major surface thereof.

13. An assembly of a radar radiation redirecting pavement marking tape and a pavement marking cove tape according to any of claims 11 or 12, wherein the radar radiation inhibition layer of the pavement marking cover tape inhibits incident radar radiation onto the pavement marking tape or redirected from the pavement marking tape.

14. A method of using a radar radiation redirecting inhibition layer according to any of claims 1 to 10 for inhibiting radar radiation redirecting of a radar radiation redirecting pavement marking tape, the method comprising arranging a radar radiation redirecting inhibition layer according to any of claims 1 to 10 onto the radar radiation redirecting pavement marking tape such that radar radiation redirecting of the pavement marking tape is inhibited.
